# EUROPEAN PATENT APPLICATION

(11) **EP 3 920 485 A1**
(43) Date of publication of application: **08.12.2021**
(21) Application number: 20748902.2
(22) Date of filing: 03.02.2020
(51) Int. Cl.: H04L 12/751, H04L 12/721

(54) **PROTOCOL PROCESSING METHOD AND APPARATUS, AND STORAGE MEDIUM**

(30) Priority: 02.02.2019 CN 201910107346
(71) Applicant: ZTE Corporation, Shenzhen, Guangdong 518057 (CN)
(72) Inventor: XU, Benchong, Shenzhen, Guangdong 518057 (CN); PENG, Shaofu, Shenzhen, Guangdong 518057 (CN); DAI, Chunning, Shenzhen, Guangdong 518057 (CN)
(74) Representative: Deambrogi, Edgardo
(86) International application number: PCT/CN2020/074238
(87) International publication number: WO 2020/156579

(57) **Abstract**

Provided are a protocol processing method and apparatus, and a storage medium. The method includes: in a Routing In Fat Tree (RIFT), supporting an RIFT community structure to carry a Point of Delivery (PoD) field, and controlling, by a configured community structure policy, import or export of an RIFT route indicated in the PoD field.

## Description

The present disclosure claims priority to Chinese Patent Application No. 201910107346.4, filed with the China National Intellectual Property Administration (CNIPA) on February 2, 2019, the disclosure of which is incorporated herein by reference in its entirety.

### Technical Field

The present disclosure relates to the field of communications, and for example, to a protocol processing method and apparatus, and a storage medium.

### Background

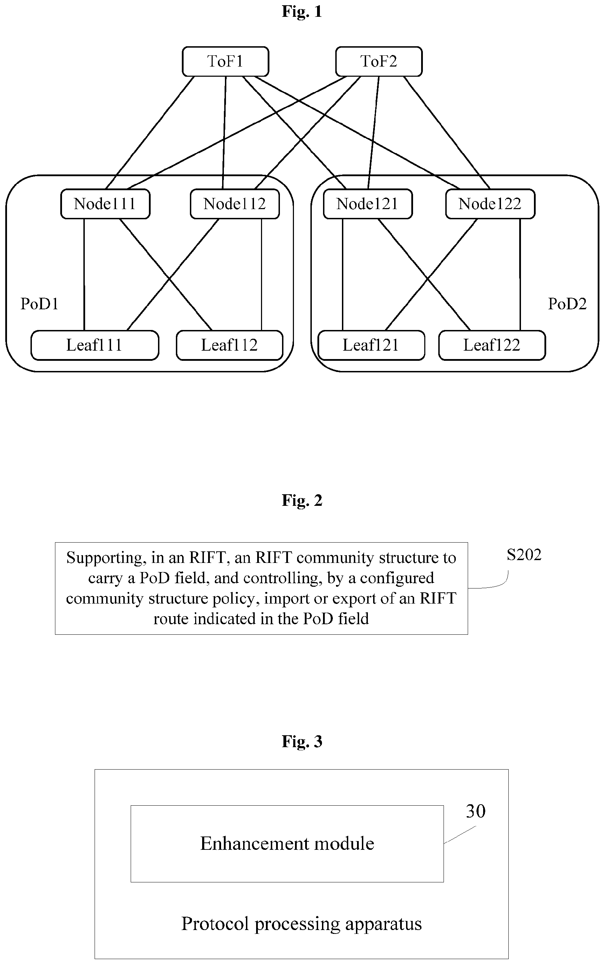

Currently, a Routing In Fat Tree (RIFT) technology is developing as a routing protocol designed for a fat tree topology (as shown in Fig. 1). The fat tree topology is widely used in a data center network, and has the potential to be used in fields such as a metropolitan area network and a bearer network. Compared with a traditional routing protocol, the RIFT protocol has advantages such as natural loop prevention, support of convenient Zero Touch Provisioning (ZTP) deployment, support of network self-detection, greatly reducing the number of routing tables of underlying devices, and support of high-degree Equal-Cost Multipath Pouting (ECMP). These advantages attract more and more study on the RIFT protocol.

In a large-scale network, multiple protocols often need to be deployed. For example, in a Virtual Private Network (VPN) scenario, in which an Interior Gateway Protocol (IGP) is used in a private network instance and a Border Gateway Protocol (BGP) is deployed in the PE node, a route needs to be imported and exported between the IGP and the BGP. For another example, in a scenario in which a network is planned to include a plurality of IGP domains and different domains use different IGP protocols, a route needs to be imported and exported between different IGP protocols. Currently, these import and export acts are usually performed according to a prefix, a routing type, and the like.

In a fat tree topology, a network is divided into a plurality of Points of Delivery (PoD), each PoD can be treated as a network module, and an operator can deploy services in each PoD according to service division. Currently, there is no method to import and export an RIFT route based on a PoD.

Aiming at the problems in the related art that the RIFT route cannot be imported or exported based on the PoD, no effective technical solution has been provided.

### Summary

Provided are a protocol processing method and apparatus, and a storage medium, which can at least solve the problems in the related art that an RIFT route cannot be imported or exported based on a PoD.

According to some embodiments of the present disclosure, a protocol processing method is provided, including: in an RIFT, supporting an RIFT community structure to carry a PoD field, and controlling, by a configured community structure policy, import or export of an RIFT route indicated in the PoD field.

According to some other embodiments of the present disclosure, a protocol processing apparatus is provided, including: an enhancement module configured to support, in an RIFT, an RIFT community structure to carry a Point of Delivery (PoD) field, and control, by a configured community structure policy, import or export of an RIFT route indicated in the PoD field.

According to some other embodiments of the present disclosure, a protocol processing method is provided, including: adding an attribute of a Routing In Fat Tree (RIFT) community structure in a Border Gateway Protocol (BGP), wherein the attribute carries the RIFT community structure and is used for controlling distribution or reception of an RIFT route.

According to some other embodiments of the present disclosure, a storage medium is provided. The storage medium stores a computer program, and the computer program is configured to execute any one of the above protocol processing methods at runtime.

By means of the embodiments of the present disclosure, in an RIFT, an RIFT community structure is supported to carry a PoD field, and the import or export of an RIFT route indicated in the PoD field is controlled by a configured community structure policy. By means of the technical solution, the problems in the related art that an RIFT route cannot be imported or exported based on a PoD are solved.

### Brief Description of the Drawings

The accompanying drawings described herein are used to provide a deeper understanding of the present disclosure, and constitute a part of the present application. The exemplary embodiments of the present disclosure and the description thereof are used to explain the present disclosure. The drawings and the exemplary embodiment do not constitute limitations to the present disclosure. In the drawings:
Fig. 1 is an exemplary diagram of RIFT networking in the related art;
Fig. 2 is a flowchart of a protocol processing method according to an embodiment of the present disclosure;
Fig. 3 is a structural block diagram of a protocol processing apparatus according to an embodiment of the present disclosure;
Fig. 4 is a schematic diagram of RIFT multi-region networking according to an exemplary embodiment of the present disclosure; and
Fig. 5 is a schematic diagram of RIFT and IGP interconnection networking according to an exemplary embodiment of the present disclosure.

### Detailed Description

The present disclosure is described below in detail with reference to the drawings and in conjunction with the embodiments. It is to be noted that embodiments in the present application and characteristics in the embodiments may be combined to derive other embodiments not explicitly described.

It is to be noted that the terms "first", "second" and the like in the specification, the claims and the drawings of the present disclosure are used to distinguish similar objects, and are not used to describe a specific sequence or a precedence order.

In the RIFT protocol, a Policy Guided Prefix (PGP), is sent in a Topology Information Element (TIE), and carries a struct Community used for a receiver to perform policy control. At present, this attribute can only be used in an RIFT domain and cannot be transmitted to other domains. Based on the described technical solution of the embodiments of the present disclosure, a solution capable of solving the problems that an RIFT route cannot be imported or exported based on a PoD is provided.

### Embodiment 1

Provided is a protocol processing method. Fig. 2 is a flowchart of a protocol processing method according to an embodiment of the present disclosure. As shown in Fig. 2, the method includes operation S102 which is described in detail below.

In operation S102, in a Routing In Fat Tree (RIFT), an RIFT community structure is supported to carry a PoD field, and import or export of an RIFT route indicated in the PoD field is controlled by a configured community structure policy.

By means of the solution, in a Routing In Fat Tree (RIFT), an RIFT community structure is supported to carry a PoD field, and the import or export of an RIFT route indicated in the PoD field is controlled by a configured community structure policy. By means of this technical solution, the problems in the related art that an RIFT route cannot be imported or exported based on a PoD are solved.

In the embodiment, the described method may be executed by any device implementing the RIFT protocol, for example, in the case where the RIFT protocol runs on a switch, the described method is executed by the switch.

It should be noted that the PoD in the protocol is an integer with a length of WORD32, and is determined by configuration. Different PoDs are not necessarily consecutive in value.

In the embodiment of the present disclosure, the RIFT community structure may further carry a reserved field, wherein the reserved field is used for representing at least one of: an RIFT region, an RIFT instance, and an RIFT topology.

In the embodiment of the present disclosure, the RIFT route is imported into a BGP, and carries an RIFT community structure. The BGP is configured with a route re-distribution policy of an RIFT community attribute.

Whether to re-distribute the RIFT route is determined by comparing the RIFT community structure carried in the RIFT route with the route re-distribution policy.

In the embodiment of the present disclosure, a BGP sends the RIFT route to a neighboring node, the RIFT route carries an RIFT community attribute, and the BGP controls the RIFT route based on a neighboring node sending policy. Whether to send the RIFT route is determined by comparing the RIFT community attribute carried in the RIFT route with the neighboring node sending policy.

In the embodiment of the present disclosure, an RIFT route received by a neighbouring node of a BGP carries an RIFT community attribute, and the RIFT route is controlled by a neighboring node receiving policy. Whether to receive the RIFT route is determined by comparing the RIFT community attribute carried in the RIFT route with the neighboring node receiving policy.

In the embodiment of the present disclosure, an RIFT PGP route is imported into a BGP; a second sender receives K RIFT PGP routes, and sends the K RIFT PGP routes to a second receiver via the BGP, wherein the second receiver configures a second receiving policy, and the second receiving policy is used for instructing whether the second receiver receives part or all of the K RIFT PGP routes. In some embodiments, K is a positive integer.

In the embodiment of the present disclosure, an RIFT route is imported into an Interior Gateway Protocol (IGP), and a third receiving policy is configured, wherein the third receiving policy is used for instructing a third sender to import a route of PoD K into the IGP. In some embodiments, K is a positive integer.

The foregoing technical solution of the present disclosure may be understood as a flow method for interaction between an RIFT and other routing protocols. A mapping relationship is established with the PoD by using the RIFT Community, and then a BGP attribute is extended to carry the RIFT community structure. By setting the RIFT community related policies in both the ingress direction and the egress direction, it is decided whether the RIFT route is passed or rejected.

Through the description of the above implementations, those having ordinary skill in the art can understand that the method according to the above embodiment may be implemented by means of software plus a necessary general hardware platform, and of course, may also be implemented through hardware, but in many cases, the former is a better implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

### Embodiment 2

The present embodiment provides a protocol processing apparatus, which is configured to implement the above embodiments and exemplary implementations, and the details having been described will not be repeated. As used below, the term "module" may implement a combination of software and/or hardware of a predetermined function. Although the apparatus described in the following embodiments is preferably implemented in software, the implementation in hardware or a combination of software and hardware is also possible and contemplated.

Fig. 3 is a structural block diagram of a protocol processing apparatus according to an embodiment of the present disclosure. As shown in Fig. 3, the apparatus includes an enhancement module 30.

The enhancement module 30 is configured to support, in an RIFT, an RIFT community structure to carry a PoD field, and control, by a configured community structure policy, import or export of an RIFT route indicated in the PoD field.

By means of the embodiment of the present disclosure, in an RIFT, an RIFT community structure is supported to carry a PoD field, and the import or export of an RIFT route indicated in the PoD field is controlled by a configured community structure policy. By means of the technical solution, the problems in the related art that an RIFT route cannot be imported or exported based on a PoD are solved.

In the embodiment of the present disclosure, the RIFT community structure may further carry a reserved field, wherein the reserved field is used for representing at least one of: an RIFT region, an RIFT instance, and an RIFT topology.

In the embodiment of the present disclosure, the RIFT route is imported into a BGP, and carries an RIFT community structure. The BGP is configured with a route re-distribution policy of an RIFT community attribute. Whether to re-distribute the RIFT route is determined by comparing the RIFT community structure carried in the RIFT route with the route re-distribution policy.

In the embodiment of the present disclosure, a BGP sends the RIFT route to a neighboring node, the RIFT route carries an RIFT community attribute, and the BGP controls the RIFT route based on a neighboring node sending policy. Whether to send the RIFT route is determined by comparing the RIFT community attribute carried in the RIFT route with the neighboring node sending policy.

In the embodiment of the present disclosure, an RIFT route received by a neighbouring node of a BGP carries an RIFT community attribute, and the RIFT route is controlled by a neighboring node receiving policy. Whether to receive the RIFT route is determined by comparing the RIFT community attribute carried in the RIFT route with the neighboring node receiving policy.

In the embodiment of the present disclosure, an RIFT PGP route to be imported into a BGP; a second sender receives K RIFT PGP routes, and sends the K RIFT PGP routes to a second receiver via the BGP, wherein the second receiver configures a second receiving policy, and the second receiving policy is used for instructing whether the second receiver receives part or all of the K RIFT PGP routes.

In the embodiment of the present disclosure, an RIFT route is imported into an Interior Gateway Protocol (IGP), and a third receiving policy is configured, wherein the third receiving policy is used for instructing a third sender to import a route of PoD K into the IGP.

It should be noted that the technical solutions in the foregoing Embodiment 1 to Embodiment 2 may be used in combination, and may also be used separately, which is not limited in the embodiments of the present disclosure.

### Embodiment 3

The embodiment of the present disclosure provides a protocol processing method, including an operation 1 which is described in detail below.

In operation 1, an attribute of an RIFT community structure is added in a BGP, wherein the attribute carries the RIFT community structure and is used for controlling distribution or reception of an RIFT route.

By means of the embodiment of the present disclosure, an attribute of an RIFT community structure is added in a BGP, wherein the attribute carries the RIFT community structure and is used for controlling distribution or reception of an RIFT route. By means of the technical solution, the problems in the related art that distribution or reception of an RIFT route cannot be controlled are solved.

The foregoing technical solutions are described below with reference to exemplary embodiments, which are not intended to limit the technical solutions of the embodiments of the present disclosure.

### Exemplary Embodiment 1

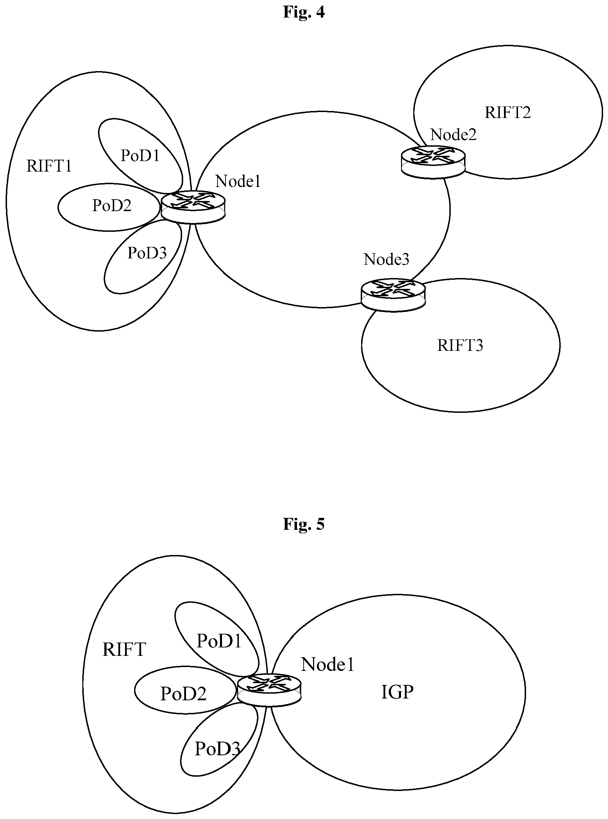

The present exemplary embodiment 1 relates to the import of a common RIFT route into BGP. As shown in Fig. 4, RIFT1, RIFT2 and RIFT3 are three RIFT regions, an intermediate network among the RIFT regions is enabled by means of BGP, and each RIFT region is provided with three PoDs. The Nodes are ToF nodes of the RIFT. The Node 2 learns the route from RIFT1 PoD2, but does not learn the routes from RIFT1 PoD1 and PoD3. The Node3 learns the route from RIFT1 PoD3 but does not learn the routes from RIFT1 PoD1 and PoD2.
1) An association relationship between a RIFT PoD and a Community is established, for example, as follows: 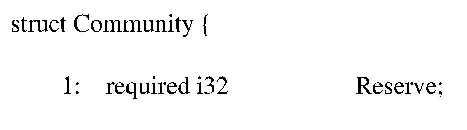 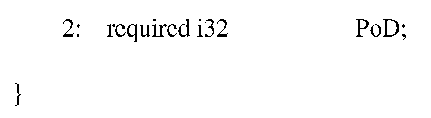
   The Reserve refers to a reserved field, and may be extended to represent an RIFT region or an RIFT instance or an RIFT topology.
   The PoD field indicates the PoD value of the RIFT.
   The string is expressed as Reserve: PoD, for example, 0:1 represents Reserve 0, PoD 1.
2) A BGP attribute, referred to as an RIFT-Community attribute (also written as RIFT community attribute), is newly added, wherein the RIFT-Community attribute carries the foregoing RIFT community structure.
3) A BGP re-distribution policy is configured on the Node1, for example, the configuration of Permit 0:2 and Permit 0:3 only allows the RIFT routes from PoD2 and PoD3 to be re-distributed. The PoD in the RIFT-Community attribute carried in the route re-distributed from PoD2 to the BGP is 2, and the PoD in the RIFT-Community attribute carried in the route re-distributed from PoD3 to the BGP is 3.
4) The Node2 configures a policy, e.g., Permit 0: 2, which only allows reception of a route from PoD2. After receiving the RIFT route, the BGP compares the RIFT-Community attribute with the policy, and only receives the route from PoD2.
5) The Node3 configures a policy, e.g., Permit 0: 3, which only allows reception of a route from PoD3. After receiving the RIFT route, the BGP compares the RIFT-Community attribute with the policy, and only receives the route from PoD3.

### Exemplary Embodiment 2

The exemplary embodiment 2 relates to the import of the RIFT PGP route into the BGP. As shown in Fig. 4, the PGP itself carries a Community structure, which has been specified in the RIFT protocol, and the value of the Community structure is determined by the policy configuration. In this embodiment, the policy of the RIFT and the BGP related policies are commonly used.
1) In the RIFT protocol, the PGP TIE is required to carry a Community, which is 64-bit data or data formed by two 32-bit data.
2) A BGP attribute, called a RIFT-Community attribute, is newly added, wherein the attribute carries the RIFT-Community structure. By virtue of this setting, the interior policies related to RIFT can be directly applied in the BGP.
   Supposing that the Node1 in Fig. 4 receives two PGPs carrying Community 1:1 and 1:2 respectively, it is required to identify, receive and generate two routes PGP1 and PGP2 respectively according to the local policy Permit 1:1 and Permit 1:2 of the RIFT.
3) BGP imports RIFT routes PGP1 and PGP2, and the import rule may selectively multiplex a policy of the RIFT, for example, a policy of Permit 1:1 may be used to only import PGP1.
4) The BGP route carries a RIFT-Community attribute and is sent to the Node2 and the Node3.

Assuming that the Node2 needs the PGP1 route, then the Node2 needs to configure a rule Permit 1:1 to receive this route.

Assuming that the Node3 does not need the PGP1 route, then the Node3 refuses this route by not configuring Permit 1:1 or configuring Deny 1:1.

### Exemplary Embodiment 3

The exemplary embodiment 3 relates to the import of the RIFT route into the IGP, as shown in Fig. 5. The route learned by the RIFT on the Node1 from the PoD1 is imported into the IGP, and routes from other PoDs are not imported.
1) An association relationship between an RIFT PoD and a Community is established, for example, as follows:

| | | |
|---|---|---|
| struct Community { | | |
| 1: | required i32 | Reserve; |
| 2: | required i32 | PoD; |
| } | | |

The Reserve refers to a reserved field, and may be extended to represent an RIFT region or an RIFT instance or an RIFT topology.
The PoD field indicates the PoD value of the RIFT.
The string is expressed as Reserve: PoD, for example, 0:1 represents Reserve 0, PoD1.
2) A BGP attribute, referred to as an RIFT-Community attribute (also written as RIFT community attribute), is newly added, wherein the RIFT-Community attribute carries the foregoing RIFT-Community structure.
3) The IGP configures an import policy, e.g., Permit 0: 1, which only imports the route from PoD1.

### Embodiment 4

The embodiment of the present disclosure provides a storage medium. The storage medium stores a computer program. The computer program executes the method according to any one of the preceding embodiments at runtime.

In some exemplary implementations of this embodiment, the storage medium may be configured to store program codes for executing the following operation.

In operation S1, in an RIFT, a PoD field is supported to carry an RIFT community structure, and import or export of an RIFT route indicated in the PoD field is controlled by a configured community structure policy.

In some exemplary implementations of this embodiment, the storage medium may include, but is not limited to, any medium that can store program codes, such as a USB flash disk, a Read-Only Memory (ROM), a Random Access Memory (RAM), a removable hard disk, a magnetic disk, or an optical disk.

For specific examples in this embodiment, reference may be made to the examples described in the foregoing embodiments and exemplary implementations, and details are not repeatedly described herein in this embodiment.

It is apparent that a person skilled in the art shall understand that all of the above-mentioned modules or operations in the present disclosure may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the embodiments of the present disclosure are not limited to any specific hardware and software combination.

The above is only the exemplary embodiments of the present disclosure, not intended to limit the present disclosure. As will occur to those having ordinary skill in the art, the present disclosure is susceptible to various modifications and changes. Any modifications, equivalent replacements, improvements and the like made within the principle of the present disclosure shall fall within the scope of protection of the present disclosure.

## Claims

1. A protocol processing method, comprising:
supporting, in a Routing In Fat Tree, RIFT, an RIFT community structure to carry a Point of Delivery, PoD, field, and controlling, by a configured community structure policy, import or export of an RIFT route indicated in the PoD field.

2. The method according to claim 1, wherein the RIFT community structure further carries a reserved field, wherein the reserved field is used for representing at least one of: an RIFT region, an RIFT instance, and an RIFT topology.

3. The method according to claim 1, wherein the RIFT route is imported into a Border Gateway Protocol, BGP, and the RIFT route carries the RIFT community structure; and the BGP is configured with a route re-distribution policy of an RIFT community attribute;
controlling, by the configured community structure policy, the importing or exporting of the RIFT route indicated in the PoD field comprises:
determining, by comparing the RIFT community structure carried in the RIFT route with the route re-distribution policy, whether to re-distribute the RIFT route.

4. The method according to claim 1, wherein the RIFT route is imported into a Border Gateway Protocol, BGP, the BGP sends the RIFT route to a neighboring node, the RIFT route carries an RIFT community attribute, and the BGP controls the RIFT route based on a neighboring node sending policy;
controlling, by the configured community structure policy, the importing or exporting of the RIFT route indicated in the PoD field comprises:
determining, by comparing the RIFT community attribute carried in the RIFT route with the neighboring node sending policy, whether to send the RIFT route.

5. The method according to claim 1, wherein the RIFT route is imported into a Border Gateway Protocol, BGP, an RIFT route received by a neighboring node of the BGP carries an RIFT community attribute, and the RIFT route is controlled by a neighboring node receiving policy;
controlling, by the configured community structure policy, the importing or exporting of the RIFT route indicated in the PoD field comprises:
determining, by comparing the RIFT community attribute carried in the RIFT route with the neighboring node receiving policy, whether to receive the RIFT route.

6. The method according to claim 1, wherein an RIFT Policy Guided Prefix, PGP, route is imported into a Border Gateway Protocol, BGP; a sender receives K RIFT PGP routes and sends the K RIFT PGP routes to a receiver via the BGP, wherein the receiver configures a receiving policy, and the receiving policy is used for instructing whether the receiver receives part or all of the K RIFT PGP routes.

7. The method according to claim 1, wherein an RIFT route is imported into an Interior Gateway Protocol, IGP, and a receiving policy is configured, wherein the receiving policy is used for instructing a sender to import a route of PoD K into the IGP.

8. A protocol processing apparatus, comprising:
an enhancement module, configured to support, in a Routing In Fat Tree, RIFT, an RIFT community structure to carry a Point of Delivery, PoD, field, and control, by a configured community structure policy, import or export of an RIFT route indicated in the PoD field.

9. The apparatus according to claim 8, wherein the RIFT community structure further carries a reserved field, wherein the reserved field is used for representing at least one of: an RIFT region, an RIFT instance, and an RIFT topology.

10. A protocol processing method, comprising:
adding an attribute of a Routing In Fat Tree, RIFT, community structure in a Border Gateway Protocol, BGP, wherein the attribute carries the RIFT community structure and is used for controlling distribution or reception of an RIFT route.

11. A storage medium storing a computer program, wherein the computer program is configured to perform the method according to any one of claims 1 to 7 and 10 at runtime.
